# EUROPÄISCHE PATENTSCHRIFT

(11) **EP 2 564 673 B1**
(45) Veröffentlichungstag und Bekanntmachung des Hinweises auf die Patenterteilung: **07.12.2016**
(21) Anmeldenummer: 11716270.1
(22) Anmeldetag: 27.04.2011
(51) Int. Cl.: H05B 39/04, H05B 33/08

(54) **SCHALTUNGSANORDNUNG ZUM BETREIBEN VON LEDS**
CIRCUIT ARRANGEMENT FOR OPERATING LEDS
CIRCUITERIE POUR FAIRE FONCTIONNER DES DEL

(30) Priorität: 27.04.2010 DE 102010028230
(43) Veröffentlichungstag der Anmeldung: 06.03.2013
(73) Patentinhaber: Tridonic Jennersdorf GmbH, 8380 Jennersdorf (AT)
(72) Erfinder: PACHLER, Peter, A-8042 Graz (AT)
(74) Vertreter: Rupp, Christian
(86) Internationale Anmeldenummer: PCT/EP2011/056624
(87) Internationale Veröffentlichungsnummer: WO 2011/134980

(56) Entgegenhaltungen:
- EP-A2- 2 031 940
- DE-U1-202005 006 053
- US-A- 5 661 645
- US-A1- 2006 192 502
- US-A1- 2008 258 647
- US-A1- 2009 251 059

## Beschreibung

Um Energie zu sparen, werden Zug um Zug die herkömmlichen Glühlampen im privaten und öffentlichen Bereich durch andere Lampentypen, insbesondere durch solche mit LEDs ersetzt. Dazu sind jedoch Zusatzmaßnahmen unentbehrlich.

Mit Wechselspannung betriebene Glühlampen emittieren Licht unabhängig von der Polaritätsrichtung der Spannung bzw. des durch die Glühlampe hindurchfließenden Stromes. LEDs lassen demgegenüber einen Stromfluss nur in einer Polaritätsrichtung zu. Es ist deshalb erforderlich, die Netzwechselspannung zunächst in eine Gleichspannung umzuwandeln. Dies geschieht bspw. durch eine Elektronik welche die Netzspannung in einen Konstantstrom oder eine für die speziellen Aufbau geeignete Konstantspannung umwandelt, oder über einen Vollbrückengleichrichter, der aus der Wechselspannung eine pulsierende Gleichspannung mit aufeinanderfolgenden Sinushalbwellen gleicher Polarität erzeugt mit einer für den Betrieb angepassten Anzahl von LEDs.

Auf dem Gebiet der Erfindung sind die Dokumente DE 20 2005 006 053 U1, US 5,661,645 A, EP 2 031 940 A2, US 2006/192502 A1, US 2009/251059 A1, und US 2008/258647 A1 bekannt.

Der Betrieb von LEDs mit einer solchen pulsierenden Gleichspannung hat jedoch zur Folge, dass das von den LEDs emittierte Licht im Takt der Netzfrequenz flackert. Es ist bekannt, DC/DC-Wandler vorzuschalten, die diesen Effekt zumindest verringern. Diese DC/DC-Wandler stellen indessen zusätzliche Bauteile dar, die aufgrund von Kosten und Volumen (insbesondere bei Retrofit LED-Lampen) nachteilig sein können.

Der Erfindung liegt deshalb die Aufgabe zugrunde, eine Schaltungsanordnung zum Betreiben von LEDs mit einer pulsierenden Gleichspannung zu schaffen, die eine möglichst flackerfreie Lichtausbeute der LEDs gewährleistet.

Unter "LEDs" sind im Rahmen der Erfindung auch OLEDs zu verstehen.

Diese Aufgabe wird erfindungsgemäss durch die Merkmale der unabhängigen Ansprüche gelöst. Die abhängigen Ansprüche bilden den zentralen Gedanken der Erfindung in besonders vorteilhafter Weise weiter.

Die Konstantstromquelle versorgt die LEDs mit einem annähernd konstanten Strom während die Amplitude der Netzspannung ausreichend hoch ist. In dieser Zeit wird die Kapazität der Hilfsstromquelle aufgeladen und es fließt ein minimaler Strom zusätzlich von der Hilfskonstantstromquelle. In den Pulslücken übernimmt die Hilfsstromquelle die Stromversorgung vollständig und entlädt in dieser Zeit die gespeicherte Energie des Kondenstors.

Unter "Pulslücken" sollen diejenigen Zeitabschnitte verstanden werden, in denen die Spannungswerte der pulsierenden Gleichspannung den vorstehend erwähnten vorgegeben Mindestwert nicht überschreiten. Das ist dort der Fall, wo die Wechselspannung, aus der die schwankende Gleichspannung durch Gleichrichtung erzeugt wird, die Flussspannung der in Serie geschalteten LEDs unterschreitet.

Die Hilfsstromquelle umfasst einen Energiespeicher wie bspw. einen Ladekondensator, der hauptsächlich während des Spannungsanstiegs der pulsierenden Gleichspannung der gleichgerichteten Netzwechselspannung geladen und dann kurzzeitig im Bereich der Pulslücken zur Stromversorgung der LEDs herangezogen wird, wobei seine Ladung dann entsprechend reduziert wird.

Der Erfindung liegt die weitere Aufgabe zugrunde, eine Schaltungsanordnung zum Betreiben von LEDs zu schaffen, mit der es möglich ist, das die Helligkeit des von den LEDs emittierten Lichtes mittels eines vorgeschalteten handelsüblichen Phasenanschnitts-Dimmers zu steuern. Diese Aufgabe trägt dem Umstand Rechnung, dass zu Hausinstallationen zur Stromversorgung von Leuchten, die bisher fast ausschließlich Glühlampen enthielten, in der Regel auch fest eingebaute Phasenanschnitts-Dimmer gehören. Wenn nun anstelle der Leuchten mit Glühlampen mit LEDs ausgerüstete Leuchten verwendet werden (beispielsweise moderne Retrofit-Lampen), so soll deren Helligkeit gleichermaßen mittels der schon vorhandenen Phasenanschnitts-Dimmer verändert werden können.

Letzteres ist jedoch aus folgendem Grund nicht ohne weiteres möglich. Die herkömmlichen handelsüblichen Phasenanschnitts-Dimmer enthalten in der Regel Halbleiterelemente, wie beispielsweise ein TRIAC in Verbindung mit einem DIAC. Der DIAC arbeitet mit einem Phasenschieber zusammen, mittels welchem der Zündzeitpunkt des TRIACs innerhalb einer Halbwelle der Netzwechselspannung festgelegt werden kann. `Zünden` bedeutet bei einem TRIAC, dass er von einem nichtleitenden hochohmigen Zustand in einen leitenden niederohmigen Zustand umgeschaltet wird. Zum Ende der Halbwelle muss der TRIAC wieder `gelöscht`, d.h. von dem leitenden niederohmigen Zustand in den nicht-leitenden hochohmigen Zustand zurückgeschaltet werden. Dazu muss durch den TRIAC ein entsprechender Löschstrom fließen, der nur dann zustande kommt, wenn die Last eine ohmsche Charakteristik hat. Eine solche hat eine Glühlampe, nicht aber eine LED. Bei einer LED fließt in der Nähe des Nulldurchganges der Wechselspannung normalerweise überhaupt kein Strom. Wenn der TRIAC nach dem Zünden am Ende der betreffenden Halbwelle nicht gelöscht wird, führt dies zu einem Umkehrstrom und zu einer Art unkontrollierter Selbstzündung in der nächsten Halbwelle. Die Folge ist dann ein irregulärer Betriebsmodus.

Diese Aufgabe kann bspw. gelöst werden durch eine Schaltungsanordnung zum Betreiben von LEDs mit einer Wechselspannung unter Verwendung eines handelsüblichen Phasenanschnitts-Dimmers, die gekennzeichnet ist durch eine Löschschaltung, welche bei einem durch den pulslückenbedingten Abfall der Eingangsspannung den Eingangswiderstand der Schaltungsanordnung kurzfristig so stark reduziert, dass über den Eingangswiderstand ein hinreichend großer Löschstrom fließen kann.

Die Erfindung bezieht sich auch auf Verfahren zum Betrieb von LEDs, auf LED-Lampen, insbesondere Retrofit LED-Lampen sowie Beleuchtungssysteme mit wenigstens einer derartigen LED-Lampe.

Ein Ausführungsbeispiel der Erfindung wird nachfolgend anhand der einzigen **Figur** beschrieben.

Die einzige **Figur** betrifft eine Schaltungsanordnung zum Betreiben, ausgehend von einer Wechselspannung einer LED-Strecke mit einer oder mehreren LEDs LED1, LED2 und LED3, die seriell und/oder parallel verschaltet sein können.

Diese Wechselspannung wird der LED-Strecke nicht direkt zugeführt, sondern zunächst bspw. in einem Brückengleichrichter, bestehend aus den Brückendioden D1, D2, D3 und D4 gleichgerichtet. Am Ausgang des Brückengleichrichters liegt dann eine mit der doppelten Netzfrequenz variierende Gleichspannung vor, die sich aus aufeinanderfolgenden Sinushalbwellen zusammensetzt. Die Zeitabschnitte, in denen die pulsierende Gleichspannung um den jeweiligen Umkehrpunkt geringer als eine vorgegebene Schwellenspannung ist, werden nachfolgend als 'Pulslücken' bezeichnet. Diese Pulslücken liegen im Bereich der Nulldurchgänge der AC-Versorgungsspannung.

Die pulsierende Gleichspannung wird einer Serienschaltung aus der LED-Strecke, einer Konstantstromquelle und einem Widerstand R5 über eine Sperrdiode D9 zugeführt. Der Widerstand R5 ist Teil einer Hilfsstromquelle und dient zu deren Stromeinstellung.

Die Konstantstromquelle weist auf einen Transistor Q3 mit einem Emitterwiderstand R9 und einen Spannungsteiler zur Erzeugung der Basisspannung, bestehend aus einem Widerstand R11 und einer Zenerdiode D12.

Die Hilfsstromquelle besteht aus einem Transistor Q2, dem Emitterwiderstand R5, der auch den Basiswiderstand für den Transistor Q2 bildet, sowie einem Spannungsteiler, bestehend aus einem Widerstand R10 und einer Zenerdiode D11. Der Spannungsteiler dient zur Erzeugung der Basisspannung für den Transistor Q2. Auch der Hilfsstromquelle wird die pulsierende Gleichspannung zugeführt, und zwar über eine Sperrdiode D10.

Die Konstantstromquelle liefert - außer in den Pulslücken - einen im Wesentlichen konstanten Strom an die LED-Strecke. Dies ist durch die Zenerdiode D12 begründet, die die Basisspannung des Transistors Q3 konstant hält, solange die an ihr liegende Spannung über der Zenerspannung liegt. Wenn die Spannung an der Zenerdiode D12 in den Pulslücken unter die Zenerspannung fällt, wird der Transistor Q3 nicht-leitend und die Konstantstromquelle damit inaktiv.

Der von der Konstantstromquelle gelieferte Strom fließt durch den Widerstand R5. Der Spannungsabfall über dem Widerstand R5 bildet zusammen mit der über der Zenerdiode D11 abfallenden Spannung die Basisspannung des Transistors Q2. Der Widerstand R10 und der Widerstand R5 sind so dimensioniert, dass dann, wenn die Konstantstromquelle keinen Strom durch den Widerstand R5 schickt, weil sie inaktiv geworden ist, der normalerweise nicht-leitende Transistor Q2 leitend wird. Den Eingang der Hilfsstromquelle bildet ein Energiespeicher in Form eines Ladekondensators C2, der - die Pulslücken ausgenommen - über die Sperrdiode D10 aufgeladen wird. Die Hilfsstromquelle greift während der Pulslücken auf die Ladung des Ladekondensators C2 zurück und übernimmt dann anstelle der Konstantstromquelle die Stromversorgung der LED-Strecke. Die Zenerdiode D11 sorgt dafür, dass der während der Pulslücken fließende Hilfsstrom ebenfalls konstant gehalten wird, obwohl die Ladespannung an dem Ladekondensator C2 sich beim Entladen verringert.

Auf diese Weise wird also erreicht, dass - obwohl die gleichgerichtete Wechselspannung pulsiert, also stark schwankt - die Helligkeit der LEDs der LED-Strecke weniger durch die Spannungsschwankungen beeinflusst wird, sondern im wesentlichen konstant, d.h. nahezu flackerfrei bleibt. Dies ist ein erster Aspekt der Erfindung.

Bemerkenswert ist in diesem Zusammenhang, dass zur Erzielung einer zumindest annähernd flackerfreien Lichtemission der LEDs vorzugsweise weder ein DC/DC-Wandler noch ein PFC zwingend erforderlich ist.

Der zweite Aspekt der Erfindung betrifft die Verwendung eines Phasenanschnitts-Dimmers. Wenn die bisher verwendeten Glühbirnen nunmehr durch sog. Retrofit LED-Lampen ersetzt werden, besteht natürlich das Bedürfnis, auch die Helligkeit des von den LEDs emittierten Lichtes mit dem bereits vorhandenen Dimmer verändern zu können ("Dimming").

Die Schaltung enthält den typischen Aufbau eines Phasenanschnitts-Dimmers. Dieser ist in Serie mit der Last, d.h. im vorliegenden Fall mit dem Brückengleichrichter an das Netz angeschlossen. Der Dimmer enthält einen Schalter S, mit dem die Schaltungsanordnung ein- und ausschaltbar ist. Ferner enthält er ein TRIAC, bei dem es sich um ein mehrschichtiges halbleitendes Bauelement handelt, das zwischen einem nicht-leitenden hochohmigen Zustand und einem leitenden niederohmigen Zustand umschaltbar ist. Zum Umschalten ist ein Zündimpuls erforderlich. Zum Rückschalten benötigt der TRIAC einen sog. Löschstrom. Der Zündimpuls wird dem TRIAC von einem DIAC zugeführt, bei dem es sich ebenfalls um ein mehrschichtiges halbleitendes Bauelement handelt. Der Löschstrom fließt bei einem Nulldurchgang der Netzwechselspannung automatisch durch den TRIAC, wenn die mit dem Dimmer in Serie liegende Last eine Ohmsche Charakteristik zeigt und einen Stromfluss zulässt. Das ist zwar bei Glühlampen der Fall, nicht aber bei LEDs aufgrund der wesentlich geringeren elektrischen Last. Wie dieses Problem behoben werden kann, wird später noch erklärt.

Der DIAC ist über seinen Steuereingang mit einer Ladeschaltung verbunden, die aus einem Kondensator C4, einem festen Widerstand R7 und einem Potentiometer P besteht. Durch Verstellen des Potentiometers kann die Zeitkonstante der Ladeschaltung verändert werden. Die Zeitkonstante bestimmt, wann die Spannung an dem Ladekondensator C4 nach einem Nulldurchgang der Netzwechselspannung einen vorgegebenen Spannungswert erreicht, zu dem der DIAC vom nicht-leitenden in den leitenden Zustand umkippt und den TRIAC zündet. Eine Entstördrossel L und ein Entstörkondensator C3 sorgen dafür, dass beim Umschalten des DIACs und des TRIACs entstehende Spannungsspitzen nicht als Oberwellen ins Netz zurückgestrahlt werden.

Dadurch, dass der DIAC nach Beginn einer Netzhalbwelle mit Verzögerung vom nicht-leitenden in den leitenden Zustand kippt und demensprechend auch mit Verzögerung den TRIAC zündet, fließt durch den TRIAC nur ein Teil jener Netzhalbwelle. Der vor diesem Teil der Netzhalbwelle liegende angeschnittene Teil der Netzhalbwelle wird unterdrückt. Auf diese Weise wird eine Reduzierung der den LEDs zugeführten Leistung und damit eine Verminderung der Helligkeit des von den LEDs emittierten Lichtes erzielt, die mit dem Potentiometer einstellbar ist.

Wie bereits erwähnt, muss der TRIAC am Ende einer Netzhalbwelle durch einen Löschstrom wieder in den hochohmigen, d.h. nicht-leitenden Zustand überführt werden. Da LEDs im Bereich des Nulldurchganges überhaupt keinen Stromfluss zulassen und dementsprechend auch keine Ohmsche Charakteristik haben, muss eine Maßnahme getroffen werden, um dennoch einen Löschstrom durch den TRIAC zu initiieren. Dies geschieht durch eine Löschschaltung, welche bspw. parallel zum Ausgang des Brückengleichrichters liegt. Die Löschschaltung hat die Aufgabe, während der Nulldurchgänge der Netzwechselspannung selektiv die Last zu erhöhen, bspw. durch Bildung eines niederohmigen Lastwiderstands, durch den ein Löschstrom fließen kann.

Die Löschschaltung besteht im vorliegenden Beispiel wesentlichen aus einem Feldeffekttransistor FET, der in Serie mit einem strombegrenzenden Lastwiderstand R4 parallel zum Ausgang des Brückengleichrichters liegt. Dieser Feldeffekttransistor FET ist normalerweise nicht-leitend und hochohmig, nur in den Pulslücken wird er niederohmig und leitend geschaltet. Parallel zu seiner Source-Gate-Strecke liegen ein Kondensator C1, eine Zehnerdiode D6 und die Emitter-Kollektor-Strecke eines Kippstufentransistors Q1. Dieser Kippstufentransistor Q1 ist in Serie mit seinem Kollektorwiderstand R6 an den Ausgang des Brückengleichrichters angeschlossen. Die Basisspannung des Kippstufentransistors Q1 wird durch ein Netzwerk erzeugt, das aus den Widerständen R1, R2, R3, R7 sowie durch eine Zehnerdiode D5 und eine Diode D8 gebildet ist. Das Netzwerk liegt ebenfalls parallel zum Ausgang des Brückengleichrichters.

Die Funktion der Löschschaltung ist wie folgt: Dem Kippstufentransistor Q1 wir normalerweise - außer in den Pulslücken - eine Basisspannung zugeführt, bei der der Kippstufentransistor leitend, d.h. niederohmig ist. In diesem Fall wird von dem Kippstufentransistor Q1 dem Gate des Feldeffekttransistors FET eine Spannung zugeführt, die unterhalb der Zehnerspannung der Zehnerdiode D6 liegt. Das hat zur Folge, dass, wie bereits beschrieben, der Feldeffekttransistor FET normalerweise hochohmig, d.h. nicht-leitend ist. Wenn zu Beginn einer Pulslücke der Spannungswert der betreffenden Halbwelle unter den vorgegeben Schwellwert fällt, so bewirkt insbesondere die Zehnerdiode D5, dass der Kippstufentransistor Q1 schlagartig vom leitenden in den nicht-leitenden Zustand kippt und damit hochohmig wird. Dies hat insbesondere auf die Zehnerdiode D6 die Wirkung, dass deren Zehnerspannung überschritten wird, wodurch der Feldeffekttransistor FET seinerseits veranlasst wird, schlagartig von dem nichtleitenden hochohmigen Zustand in den leitenden niederohmigen Zustand überzugehen, mit der Folge, dass durch den TRIAC zum im Bereich des Nulldurchganges der Netzwechselspannung ein Löschstrom fließen kann. Wenn die Spannung der betreffenden Sinushalbwellen der pulsierenden Gleichspannung wieder über den vorgegebenen Schwellwert stiegt, so kippt der Kippstufentransistor Q1 wieder in den nicht-leitenden niederohmigen Zustand und der Feldeffekttransistor FET schaltet in den hochohmigen Zustand zurück, indem kein Strom mehr durch ihn fließt. Das bedeutet, dass hohe Verluste infolge des Stromflusses durch den Feldeffekttransistor FET nur während der kurzen Pulslücken auftreten. Der außerhalb der Pulslücken durch den Kippstufentransistor fließende Strom ist für die Leistungsbilanz unerheblich, da der Kollektorwiderstand R6 relativ hochohmig dimensioniert ist. Die Aufgabe des Kippstufentransistors Q1 besteht lediglich darin, den Feldeffekttransistor FET kurzzeitig von einem Zustand in den anderen um- und wieder zurückzuschalten.

Durch das Umschalten des DIACs und des TRIACs können, wie oben beschrieben, Spannungsspitzen entstehen. Diese könnten die Bauelemente der Schaltungsanordnung beschädigen. Um dies zu verhinden, ist parallel zum Ausgang des Brückengleichrichters eine Schutzschaltung geschaltet, die aus zwei in Serie liegenden Zehnerdioden D7 und D8 besteht.

Abschließend sei darauf hingewiesen, dass wenn es nur um den flackerfreien Betrieb der LEDs geht, das Vorhandensein eines Phasenanschnitts-Dimmers und damit auch eine Löschschaltung nicht zwingend erforderlich sind.

Ebenso sind, wenn es nur darum geht, dass das von den LEDs emittierte Licht mit einem bereits vorhandenen Phasenanschnitts-Dimmer dimmbar sein soll, das Vorhandensein der Konstantstromquelle und der Hilfsstromquelle nicht zwingend erforderlich. Dies jedenfalls dann, wenn man bereit ist, ein begrenztes Flackern des von den LEDs emittierten Lichtes in Kauf zu nehmen. Das Flackern lässt sich durch Verwendung einer normalen Glättungsschaltung, die dem Brückengleichrichter nachgeschaltet ist, zumindest auf ein erträgliches Maß reduzieren.

Beide Erfindungsaspekte sind demnach unabhängig voneinander. Wie man der vorstehenden Beschreibung entnehmen kann, ergänzen sie sich jedoch vorzüglich, wenn sowohl eine Dimmung mit einem Phasenanschnitts-Dimmer als auch ein flackerfreier Betrieb der LEDs gewünscht werden.

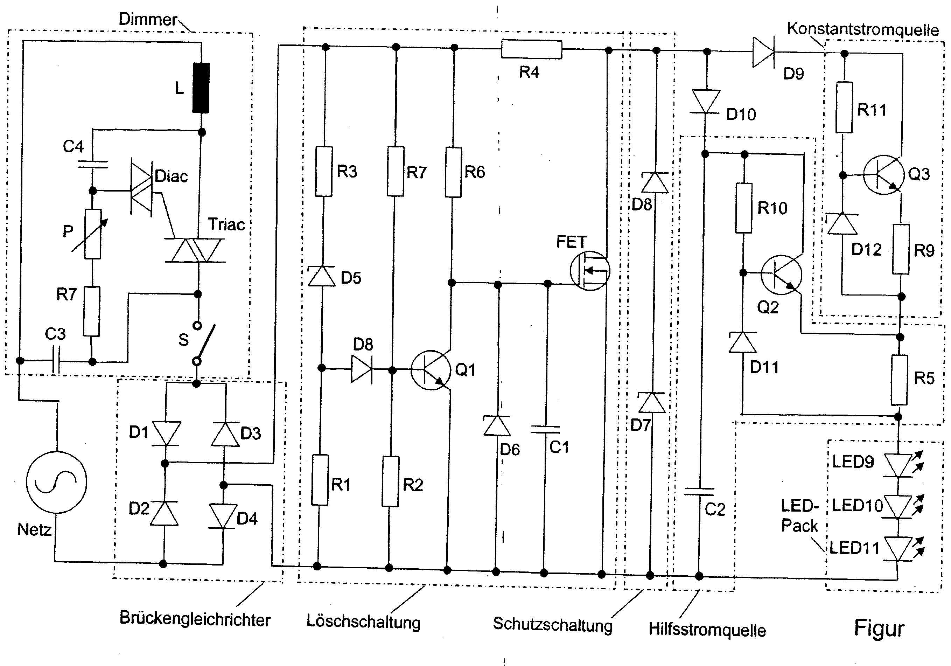

## Patentansprüche

1. Schaltungsanordnung zum Betreiben einer LED-Strecke (LED9, LED10, LED11) mit einem vorgebbaren Strom ausgehend von einer Wechselspannung, die durch eine Gleichrichtung in eine pulsierende Gleichspannung mit variierendem Pegel umgewandelt und einer Konstantstromquelle (Q3, R9, R11, D12) zugeführt ist, **gekennzeichnet durch**
die Konstantstromquelle (Q3, R9, R11, D12), die die LED-Strecke (LED9, LED10, LED11) mit einem im Wesentlichen konstanten Strom versorgt, solange die Amplitude der Wechselspannung ausreichend hoch d.h. grösser oder gleich einer Schwellenspannung ist, und eine Hilfsstromquelle (Q2, R5, R10, D11, C2), welche alternativ zu der Konstantstromquelle (Q3, R9, R11, D12) einen Strom **durch** die LED-Strecke (LED9, LED10, LED11) im Bereich der Nulldurchgänge der Wechselspannung, d.h. wenn die Amplitude der -Wechselspannung geringer als die- Schwellenspannung ist, beaufschlagt.

2. Schaltungsanordnung nach Anspruch 1, **gekennzeichnet durch**
einen Brückengleichrichter (D1, D2, D3, D4) zum Erzeugen der Gleichspannung aus der Wechselspannung, vorzugsweise aus einer Netzwechselspannung.

3. Schaltungsanordnung nach Anspruch 1 oder 2,
**dadurch gekennzeichnet,**
**dass** die Konstantstromquelle (Q3, R9, R11, D12) einen Linearregler enthält, dessen Basis-Emitter-Spannung mittels einer Zenerdiode (D12) konstant gehalten ist.

4. Schaltungsanordnung nach einem der Ansprüche 1 bis 3,
**dadurch gekennzeichnet,**
**dass** die Hilfsstromquelle (Q2, R5, R10, D11, C2) ein Energiespeicherelement (C2) enthält.

5. Schaltungsanordnung nach Anspruch 4, aufweisend einen normalerweise nicht leitend geschalteten Transistor (Q2), dessen Basis-Emitter-Spannung mittels einer Zenerdiode (D11) konstant gehalten ist, dessen Kollektor mit einem Ladekondensator (C2) und dessen Emitter über Widerstand (R5) mit den LEDs verbunden ist,
und dass über diesen Widerstand (R5) auch der von der Konstantstromquelle (Q3, R9, R11, D12) erzeugte Strom fließt, derart, dass der normalerweise nicht leitend geschaltete Transistor (Q2) leitend wird, wenn der von der Konstantstromquelle (Q3, R9, R11, D12) erzeugte Strom ausfällt, wodurch die Hilfsstromquelle (Q2, R5, R10, D11, C2) aktiviert wird.

6. Schaltungsanordnung zum Betrieb einer LED-Strecke (LED9, LED10, LED11) nach einem der vorherstehenden Ansprüche,
bei der eine Gleichspannung aus einer Wechselspannung erzeugt wird, die ihrerseits durch einen Phasenanschnittsdimmer modifiziert ist,
wobei der Phasenanschnittsdimmer ein Halbleiter-Schalterelement, vorzugsweise einen Triac, enthält, das zwischen einem leitenden und einem nichtleitenden Zustand umsteuerbar ist, **gekennzeichnet durch**
eine Löschschaltung, welche bei einem Abfall der Eingangsspannung unter einen vorgebbaren Wert den Eingangswiderstand der Schaltungsanordnung bis zum Wiederanstieg der Eingangsspannung über den vorgebbaren Wert derart reduziert, dass über den Eingangswiderstand ein Strom fliesst, der das Halbleiter-Schalterelement wieder in den nichtleitenden Zustand verbringt, **und dadurch**,
dass die Löschschaltung mit dem Ausgang des Gleichrichters verbunden ist und eine Serienschaltung aus einem Feldeffekt-Transistor (FET) und einem Strombegrenzungswiderstandes (R4) sowie eine den Feldeffekt-Transistor (FET) steuernde Kippstufe (Q1, R3, D5, R1, R2, R7, R6) aufweist,
dass in einem ersten Zustand sich die Kippstufe in einem niderohmigen Zustand befindet und der Feldeffekt-Transistor (FET)- nicht-leitend geschaltet ist,
dass parallel zu der Source-Gate-Strecke des Feldeffekt-Transistors (FET) eine Zener-Diode (D6) liegt, und
dass die Kippstufe (Q1, R3, D5, R1, R2, R7, R6) in einen hochohmigen Zustand umgeschaltet wird, wenn die pulsierende Gleichspannung einen vorgegeben Mindestwert unterschreitet, mit der Folge, dass dadurch die an der Zenerdiode (D6) anliegende Spannung unter die Zenerspannung fällt und die Zenerdiode (D6) sowie der Feldeffekt-Transistor (FET) leitend werden, wodurch kurzzeitig ein Löschstrom über die Serienschaltung aus dem Feldeffekt-Transistor (FET) und den Strombegrenzungswiderstand - (R4) fließen kann, bis die pulsierende Gleichspannung den vorgegebenen Mindestwert wieder überschreitet.

7. Schaltungsanordnung nach einem der vorhergehenden Ansprüche, **gekennzeichnet durch**
eine Schutzschaltung gegen Hochspannungsspitzen, die mindestens eine zusätzliche Zenerdiode (D7, D8) enthält.

8. Schaltungsanordnung nach Anspruch 3,
**dadurch gekennzeichnet**,
der Linearregler ein Transistor (Q3) ist.

9. Schaltungsanordnung nach Anspruch 4,
**dadurch gekennzeichnet**,
das Energiespeicherelement (C2) wenigstens ein Kondensator ist.

10. LED-Lampe, aufweisend einen oder mehrere LED-Chips sowie eine Schaltungsanordnung nach einem der vorhergehenden Ansprüche.

11. LED-Lampe nach Anspruch 10,
die als Retrofit LED-Lampe ausgebildet ist und dazu Anschlüsse in Form eines Sockels entsprechend einer Halogen-, Kompaktleuchtstoff- oder Glühlampe aufweist.

12. Dimmbares Beleuchtungssystem mit wenigstens einer LED-Lampe nach Anspruch 10 oder 11 sowie einen damit verbundenen Phasenanschnittsdimmer.

13. Verfahren zum Betreiben einer LED-Strecke (LED9, LED10, LED11) mit einem vorgebbaren Strom ausgehend von einer Wechselspannung z.B. in Form einer Netzspannung,
wobei eine Konstantstromquelle (Q3, R9, R11, D12) die LED-Strecke (LED9, LED10, LED11) mit einem im Wesentlichen konstanten Strom versorgt, solange die Amplitude der Wechselspannung ausreichend hoch d.h. grösser oder gleich einer Schwellenspannung ist, und alternativ während der Nulldurchgänge der Wechselspannung, d.h. wenn die Amplitude der Wechselspannung geringer als die Schwellenspannung ist, ein Strom durch die LED-Strecke (LED9, LED10, LED11) ausgehend von einem Energiespeicher geführt wird.

## Claims

1. Circuit arrangement for operating an LED section (LED9, LED10, LED11) with a pre-settable current from an alternating voltage, which is converted by a rectifier into a pulsating DC voltage of varying level, and fed to a constant current source (Q3, R9, R11, D12),
**characterized in that**
the constant current source (Q3, R9, R11, D12) supplies the LED section (LED9, LED10, LED11) with a substantially constant current as long as the amplitude of the alternating voltage is sufficiently high, i.e. greater than or equal to a threshold voltage, and an auxiliary power source (Q2, R5, R10, D11, C2), which, as an alternative to the constant current source (Q3, R9, R11, D12), supplies a current through the LED section (LED9, LED10, LED11) in the region of the zero crossings of the AC voltage, i.e. when the amplitude of the alternating voltage is lower than the threshold voltage.

2. Circuit arrangement according to claim 1,
**characterized in that**
a bridge rectifier (D1, D2, D3, D4) generates the DC voltage from the AC voltage, preferably from a mains AC voltage.

3. Circuit arrangement according to claim 1 or 2,
**characterized in that**
the constant current source (Q3, R9, R11, D12) comprises a linear regulator, whose base-emitter voltage is kept constant by means of a Zener diode (D12).

4. Circuit arrangement according to one of the claims 1 to 3,
**characterized in that**
the auxiliary current source (Q2, R5, R10, D11, C2) comprises an energy storage element (C2).

5. Circuit arrangement according to claim 4, comprising a normally conductive transistor (Q2) whose base-emitter voltage is kept constant by means of a Zener diode (D11), whose collector is connected to a charging capacitor (C2), and whose emitter is connected with the LEDs via a resistor (R5), and through which resistor (R5) the current also generated by the constant current source (Q3, R9, R11, D12) flows in such a way that the normally non-conductive connected transistor (Q2) becomes conductive when the current generated by the constant current source (Q3, R9, R11, D12) fails, wherein the auxiliary current source (Q2, R5, R10, D11, C2) is activated.

6. Circuit arrangement for operating an LED section (LED9, LED10, LED11) according to one of the preceding claims,
wherein a DC voltage is generated from an AC voltage, and is itself in turn modified by a phase gating dimmer,
wherein the phase gating dimmer comprises a semiconductor switch element, preferably a triac, which is reversible between a conducting and a non-conducting state,
**characterized in that**
a hold circuit, which, in the event of a drop in the input voltage below a pre-set value, the input resistance of the circuit arrangement is reduced until the renewed increase of the input voltage above the pre-settable value, so that a current flows via the input resistance, and brings the semiconductor switching element back into the non-conducting state,
and **in that**
the hold circuit is connected to the output of the rectifier and a series circuit comprising a field effect transistor (FET) and a current limiting resistor (R4) as well as a flip-flop (Q1, R3, D5, R1, R2, R7, R6) controlling the field effect transistor (FET),
in a first state the trigger circuit is in a low-resistance state, while the field effect transistor (FET) is non-conductively connected,
a Zener diode (D6) lies parallel to the source-gate path of the field effect transistor (FET), and
the flip-flop (Q1, R3, D5, R1, R2, R7, R6) is switched into a high resistance state when the pulsating direct voltage falls below a pre-set minimum value, with the result that the voltage applied to the Zener diode (D6) falls below the Zener voltage, and the Zener diode (D6) and the field effect transistor (FET) become conductive, wherein a hold current may flow via the series circuit from the field effect transistor (FET) to the current limiting resistor (R4) for a short time, until the pulsating DC voltage again exceeds the pre-set minimum value.

7. Circuit arrangement according to one of the preceding claims,
**characterized in that**
a protection circuit against high voltage spikes comprises at least one additional Zener diode (D7, D8).

8. Circuit arrangement according to claim 3,
**characterized in that**
the linear regulator is a transistor (Q3).

9. Circuit arrangement according to claim 4,
**characterized in that**
the energy storage element (C2) is at least a capacitor.

10. LED lamp comprising one or several LED chips as well as a circuit arrangement according to one of the preceding claims.

11. LED lamp according to claim 10,
which is designed as a retrofit LED lamp and comprises connections in the form of a socket corresponding to a halogen, compact fluorescent, or incandescent lamp.

12. Dimmable illumination system having at least one LED lamp according to claim 10 or 11 and an associated phase gating dimmer.

13. Method for operating an LED section (LED9, LED10, LED11) with a pre-settable current supplied from an alternating voltage, e.g. in the form of a mains voltage,
wherein a constant current source (Q3, R9, R11, D12) supplies the LED section (LED9, LED10, LED11) with a substantially constant current as long as the amplitude of the alternating voltage is sufficiently high, i.e. greater than or equal to a threshold voltage, and alternatively wherein during the zero crossings of the AC voltage, i.e. when the amplitude of the alternating voltage is lower than the threshold voltage, a current flows from an energy storage device through the LED section (LED9, LED10, LED11).

## Revendications

1. Dispositif de circuit pour l'exploitation d'une portion à LED (LED9, LED10, LED11) avec un courant prédéterminé à partir d'une tension alternative, qui est convertie par un redresseur en une tension continue pulsante avec un niveau variable et introduite dans une source de courant constant (Q3, R9, R11, D12),
**caractérisé par**
la source de courant constant (Q3, R9, R11, D12) qui alimente la portion à LED (LED9, LED10, LED11) avec un courant essentiellement constant tant que l'amplitude de la tension alternative est suffisamment élevée, c'est-à-dire supérieure ou égale à une tension de seuil, et une source de courant auxiliaire (Q2, R5, R10, D11, C2), qui alimente, en variante de la source de courant constant (Q3, R9, R11, D12) un courant à travers la portion à LED (LED9, LED10, LED11) au niveau des passages à zéro de la tension alternative, c'est-à-dire lorsque l'amplitude de la tension alternative est inférieure à la tension de seuil.

2. Dispositif de circuit selon la revendication 1,
**caractérisé par**
un redresseur à pont (D1, D2, D3, D4) pour la génération de la tension continue à partir de la tension alternative, de préférence à partir d'une tension alternative du réseau.

3. Dispositif de circuit selon la revendication 1 ou 2,
**caractérisé en ce que**
la source de courant constant (Q3, R9, R11, D12) contient un régulateur linéaire dont la tension base-émetteur est maintenue constante au moins d'une diode Zener (D12).

4. Dispositif de circuit selon l'une des revendications 1 à 3,
**caractérisé en ce que**
la source de courant auxiliaire (Q2, R5, R10, D11, C2) contient un élément d'accumulation d'énergie (C2).

5. Dispositif de circuit selon la revendication 4,
comprenant un transistor (Q2) normalement branché de manière non conductrice dont la tension base-émetteur est maintenue constante au moyen d'une diode Zener (D11), dont le collecteur est relié avec un condensateur de charge (C2) et dont l'émetteur est relié avec les LED par l'intermédiaire d'une résistance (R5) et cette résistance (R5) permet également au courant généré par la source de courant constant (Q3, R9, R11, D12) de s'écouler de façon à ce que le transistor (Q2) normalement branché de manière non conductrice devienne conducteur lorsque le courant généré par la source de courant constant (Q3, R9, R11, D12) disparaît, ce qui permet d'activer la source de courant auxiliaire (Q2, R5, R10, D11, C2).

6. Dispositif de circuit pour l'exploitation d'une portion à LED (LED9, LED10, LED11) selon l'une des revendications précédentes,
dans lequel une tension continue est générée à partir d'une tension alternative qui est modifiée de son côté par un variateur en phase montante,
le variateur en phase montante contient un élément commutateur à semi-conducteur, de préférence un triac, qui peut être commuté entre un état conducteur et un état non conducteur,
**caractérisé par**
un circuit d'effacement qui, lors d'une diminution de la tension d'entrée en dessous d'une valeur prédéterminée, réduit la résistance d'entrée du dispositif de circuit jusqu'à une nouvelle augmentation de la tension d'entrée au-dessus de la valeur prédéterminée de façon à ce que la résistance d'entrée permette à un courant de s'écouler, qui met l'élément commutateur à semi-conducteur à nouveau dans l'état non conducteur,
et en ce que le circuit d'effacement est relié avec la sortie du redresseur et comprend un circuit en série constitué d'un transistor à effet de champ (FET) et d'une résistance de limitation de courant (R4) ainsi qu'une étage de bascule (Q1, R3, D5, R1, R2, R7, R6) contrôlant le transistor à effet de champ (FET),
en ce que, dans un premier état, l'étage de bascule se trouve dans un état à faible résistance et le transistor à effet de champ (FET) est branché de manière non conductrice,
en ce qu'une diode Zener (D6) est parallèle à la portion source-grille du transistor à effet de champ (FET) et
l'étage de bascule (Q1, R3, D5, R1, R2, R7, R6) est commuté dans un état de faible résistance lorsque la tension continue pulsante passe en dessous d'une valeur minimale prédéterminée, avec pour conséquence que la tension appliquée à la diode Zener (D6) tombe en dessous de la tension Zener et que la diode Zener (D6) ainsi que le transistor à effet de champ (FET) deviennent conducteurs, ce qui permet à un courant d'effacement de s'écouler brièvement par l'intermédiaire du circuit en série à partir du transistor à effet de champ (FET) et de la résistance de limitation de courant (R4), jusqu'à ce que la tension continue pulsante dépasse à nouveau la valeur minimale prédéterminée.

7. Dispositif de circuit selon l'une des revendications précédentes,
**caractérisé par**
un circuit de protection contre les pointes de haute tension qui contient au moins une diode Zener supplémentaire (D7, D8).

8. Dispositif de circuit selon la revendication 3,
**caractérisé en ce que**
un régulateur linéaire est un Transistor (Q3).

9. Dispositif de circuit selon la revendication 4,
**caractérisé en ce que**
l'élément d'accumulation d'énergie (C2) est au moins un condensateur.

10. Lampe à LED comprenant une ou plusieurs puces LED ainsi qu'un dispositif de circuit selon l'une des revendications précédentes.

11. Lampe à LED selon la revendication 10,
qui est conçue comme une lampe à LED à rétrofit et comprend pour cela des raccords sous la forme d'un connecteur correspondant à une lampe halogène, une lampe fluorescente compacte ou une lampe à incandescence.

12. Système d'éclairage variable avec au moins une lampe à LED selon la revendication 10 ou 11 ainsi qu'un variateur en phase montante.

13. Procédé d'exploitation d'une portion à LED (LED9, LED10, LED11) avec un courant prédéterminé à partir d'une tension alternative par exemple sous la forme d'une tension de réseau,
une source de courant constant (Q3, R9, R11, D12) alimente la portion à LED (LED9, LED10, LED11) avec un courant essentiellement constant, tant que l'amplitude de la tension alternative est suffisamment élevée, c'est-à-dire supérieure ou égale à une tension de seuil, et en variante, pendant les passages à zéro de la tension alternative, c'est-à-dire lorsque l'amplitude de la tension alternative est inférieure à la tension de seuil, un courant est guidé à travers la portion à LED (LED9, LED10, LED11) à partir d'un accumulateur d'énergie.
